# EUROPEAN PATENT SPECIFICATION

(11) **EP 3 222 379 B1**
(45) Date of publication and mention of the grant of the patent: **15.12.2021**
(21) Application number: 17157956.8
(22) Date of filing: 24.02.2017
(51) Int. Cl.: B23G 1/04, B23G 1/24, B23G 5/04, B23D 17/04, B23D 29/00, B23D 35/00

(54) **MACHINE FOR CUTTING THREADED RODS**
MASCHINE ZUM SCHNEIDEN VON GEWINDESTANGEN
MACHINE POUR COUPER DES BARRES FILETÉES

(30) Priority: 23.03.2016 US 201615078028
(43) Date of publication of application: 27.09.2017
(73) Proprietor: Black & Decker Inc., New Britain, CT 06053 (US)
(72) Inventor: Parks, James, R, White Hall, MD Maryland 21161 (US); Heavel, Richard, J, Hanover, PA Pennsylvania 17331 (US); Schaub, Michael, J., Nottingham, MD Maryland 21236 (US); Kusmierski, Robert, G, York, PA Pennsylvania 17403 (US)
(74) Representative: SBD IPAdmin

(56) References cited:
- JP-A- H01 135 410
- JP-A- S63 127 810
- US-A- 5 457 889
- US-A1- 2016 101 477

## Description

This application relates to a machine for cutting threaded rods according to the preamble of claim 1. Such a machine is known from JP H01 135410 A.

A machine for cutting threaded rods is shown, for example, in Japanese Patent Publication No. 06-297232, published on October 25, 1994. This threaded rod cutting machine includes a fixed die with a cutting edge 15 and a moveable die with the cutting edge 21 coupled to a swinging member 23. Rotation of a motor 3 causes a rotation of a cam 19 and the swinging member 23 in a clockwise direction to cause the cutting edges 15, 21 to cut a threaded rod 33 by a shearing action. The motor 3 continues to rotate even after the rod is cut, and a pin 19 of the cam 19 engages with a first arm part 23 of a return plate 27 to forcibly rotate the swinging member. This causes the moveable cutting edge 21 to separate from the fixed cutting edge 15 by the force of a spring 30.

The dies for such a machine are generally removable and replaceable. Each die has a recess for receiving the threaded rod that has a size to match that of the threaded rod. The dies may be interchanged with other dies having different sized recesses for receiving threaded rods of different sizes. The fixed and moveable dies generally are not interchangeable with each other. Rather, the fixed die can only be attached only in the fixed position and the moveable die can only be attached in the moveable position. This requires two unique dies to be manufactured and sold for each size threaded rod to be cut.

According to the present invention there is provided a machine for cutting threaded rods according to claim 1.

Preferred embodiments of the present invention are defined by the dependent claims.

Each of the dies may include a fastener receiver configured to be coupled to a fastener for coupling the die to one of the arms, the fastener receiver being configured so that the fastener may only be coupled to the fastener receiver at the rear face of the die. The fastener receiver for each die may include a through bore extending from the rear face to the front face, the bore being threaded with a thread that starts at the rear face but does not extend to the front face so that a threaded fastener may only be inserted into the bore from the rear face. Each of the dies may have a polyhedral shape (e.g., a prismatic polyhedron, a polyhedron with flat sides and/or straight edges, or a polyhedron with curved sides and/or edges). The side face of each die may comprise a plurality of side faces extending between the front face and the back face, each of the side faces defining a threaded arcuate recess, at least two of the threaded arcuate recesses of each die having different sizes from each other for receiving different sizes of threaded rods.

The crests and troughs of the second thread may bias the second die toward the first die when cutting the first threaded rod. The first thread may have a first trough starting point in a plane of the first front face and the second thread may have a second trough starting point in a plane of the second front face. The first and second trough starting points may be located such that the first and second threads form a discontinuous helical path when the first and second dies are closed around the first threaded rod. The first trough may have a starting point that is spaced from the first die at a first acute angle in a counter-clockwise direction relative to a first radius that extends outward from the first side face and bisects the first recess. The second starting point may be located at a second acute angle in a counter-clockwise direction relative to a second recess that extends outward from the second side face and bisects the second recess. The first angle may be approximately equal to the second angle so that the first die is interchangeable with the second die. The first angle and the second angle may each be approximately 50° to approximately 60°. The first die may be configured to be stationary while cutting a threaded rod, and the second die may be configured to be moveable while cutting a threaded rod.

The first die may include a third side face extending between the first front face and the first rear face, and a third threaded arcuate recess with a third thread defined in the third side face and configured to receive a second threaded rod to be cut. Crests and troughs of the third thread may be aligned with troughs and crests of a thread of the second threaded rod when the first die engages the second threaded rod. The second die may include a fourth side face extending between the second front face and the second rear face, and a fourth threaded arcuate recess with a fourth thread defined in the fourth side face and configured to receive the second threaded rod to be cut. Crests and troughs of the fourth thread may be aligned with troughs and crests of the thread of the second threaded rod when the second die engages the second threaded rod. The second threaded rod, the third arcuate recess and the fourth arcuate recess each may have a diameter less than a diameter of the first threaded rod, the first arcuate recess, and the second arcuate recess. The third thread may have a third trough starting point in a plane of the third front face and the fourth thread may have a fourth trough starting point in a plane of the second front face. The third and fourth trough starting points may be located such that the third and fourth threads form a continuous helical path when the first and second dies are closed around the second threaded rod. The third trough starting point may located at a third acute angle in a clockwise direction relative to a third radius that extends inward from the third side face and bisects the third recess. The fourth starting point may be located at a fourth acute angle in a counter-clockwise direction relative to a fourth radius that extends outward from the fourth side face and bisects the fourth recess. defined in the fourth side face and configured to receive the second threaded rod to be cut. The third thread may have a third starting point at the first front face and the fourth thread may have a fourth starting point at the second front face. The third and fourth starting points may be located such that the third and fourth threads form a continuous helical path when the first and second dies are closed around the second threaded rod. Crests and troughs of the third thread may be aligned with troughs and crests of a thread of the second threaded rod when the first die engages the second threaded rod. Crests and troughs of the fourth thread may be aligned with troughs and crests of the thread of the second threaded rod when the second die engages the second threaded rod. The second threaded rod, the third arcuate recess and the fourth arcuate recess each may have a diameter less than a diameter of the first threaded rod, the first arcuate recess, and the second arcuate recess.

Advantages may include one or more of the following. A single die can be used to cut more than one size of threaded rod. The dies may only be installed on the threaded rod cutting machine in the correct, and not the reverse, orientation. These and other advantages and features will be apparent from the description, the drawings, and the claims.
FIG. 1 is perspective view of a threaded rod cutting machine.
FIG. 2 is a perspective view of the threaded rod cutting machine of FIG. 1 with a portion of the housing removed.
FIG. 3 is cross-sectional view of a portion of a transmission of the threaded rod cutting machine of FIG. 1.
FIG. 4 is a perspective view of a portion of a cam driving mechanism of the threaded rod cutting machine of FIG. 1.
FIG. 5 is a perspective view of a portion of the threaded rod cutting machine of FIG. 1 with the cover removed.
FIGS. 6A-6D are side views of the cam driving mechanism of the threaded rod cutting machine of FIG. 1 with the dies in different operational positions.
FIG. 7 is a perspective view of a first embodiment of a pair of dies for use with the threaded rod cutting machine of FIG. 1.
FIG. 8 is a perspective view of one of the dies of FIG. 7.
FIG. 9 is a front view of one of the dies of FIG. 8.
FIG. 10 is a cross-sectional view of the die of FIG. 9 taken along line 10-10.
FIG. 11 is a close-up cross-sectional view of a thread of one of the threaded recesses of the die of FIG. 8 engaging a thread of a threaded rod.
FIGS. 12A-12D are perspective views illustrating rotation of the die of FIG. 8 between a stationary die position and a moveable die position.
FIG. 13A is a schematic side view of the dies of FIG. 7 with the helical thread paths of their arcuate recesses aligned.
FIGS. 13B and 13C is a schematic side view of alternative pairs of dies with the helical thread paths of their arcuate recesses misaligned.
FIG. 14A is a perspective view of the die of FIG. 8 showing start points for the thread in one of its arcuate recesses.
FIG. 14B is a side view of the die of FIG. 14A.
FIG. 14C is a top view of the die of FIG. 14A.
FIG. 15 is a side view of second example of a die for use with a threaded rod cutting machine.
FIG. 16 is a cross-sectional side view of a third example of a die for use with a threaded rod cutting machine
FIG. 17 is a side view of a portion of a fourth example of a die for use with a threaded rod cutting machine.
FIG. 18 is a side view of a portion of a fifth example of a die for use with a threaded rod cutting machine.
FIG. 19 is a perspective view of an embodiment of dies for use with a threaded rod cutting machine.
FIGS. 20A and 20B are side views of the dies of FIG. 19.
FIGS. 21A and 21B are side views of the dies of FIG. 19 being used with a threaded rod cutting machine.
FIGS. 22A and 22B are cross-sectional views of the dies of FIG. 19 being used to cut a threaded rod in a threaded die cutting machine.
FIGS. 23A and 23B are close-up perspective views of one set of threaded recesses of the dies of FIG. 19.
FIGS. 24A and 24B are close-up perspective views of another set of threaded recesses of the dies of FIG. 19.

Examples and embodiments will now be described more fully with reference to the accompanying drawings.

Numerous specific details are set forth such as examples of specific components, devices, and methods, to provide a thorough understanding of embodiments of the present disclosure.

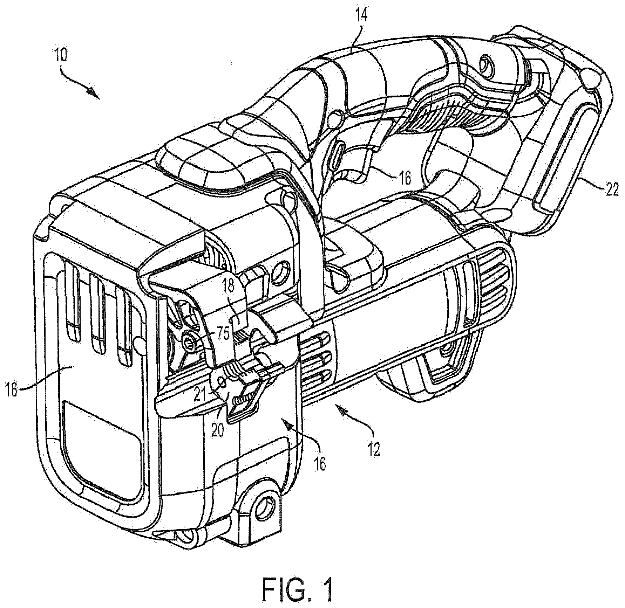

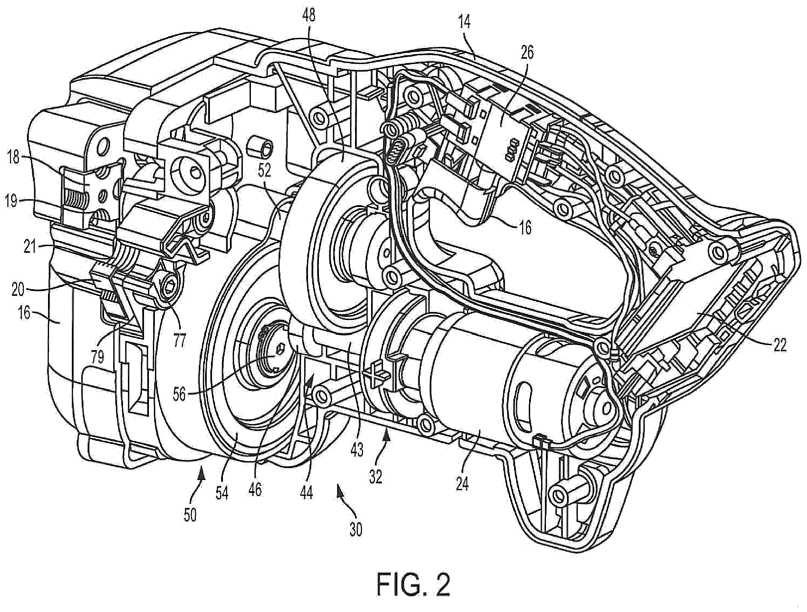

Referring to FIGS. 1 and 2, a threaded rod cutting machine 10 comprises a housing 12 with a handle 14, a trigger 16 coupled to the handle 12, and a front cover 16. The housing 12 contains a motor 24 and a speed reduction transmission 30. The cover 16 contains a cam driving mechanism 60 that is coupled to the transmission 30 (as shown and described in more detail below). Exposed from the housing 12 is a pair of cutting dies 18, 20 that are coupled to the cam driving mechanism 60. The cutting die 20 is fixed in position relative to the housing 12, while the cutting die 18 is moveable relative to the housing 12. The dies 18, 20 each include at least one concave recess 19, 21, which are configured to receive a threaded rod 120 between the dies 18, 20. Actuation of the trigger 14 causes the motor 24, transmission 30, and cam driving mechanism 60 to cause the moveable die 18 to move toward and past the fixed due 20 to cut the threaded rod 120 by a shearing action.

The motor 24 (which may be any type of motor such as an AC motor, a DC motor, a universal motor, a brushless motor, an air motor, or a combustion motor) is configured to be coupled to a power source (not shown). In the disclosed embodiment, the housing 12 includes a receptacle 22 configured to receive a removable and rechargeable battery. However, it should be understood that the machine could additionally or alternatively be coupled to another source of electrical or non-electrical power (e.g., a built in battery, a non-rechargeable battery, an AC power source, a source of compressed air, a fuel cell, etc.). The motor 24 is electrically connected to the electrical power source by a switch 26, which is actuated by the trigger 16 to control power delivery from the power source to the motor 24. The switch 26 may provide for constant or variable speed operation of the motor 24.

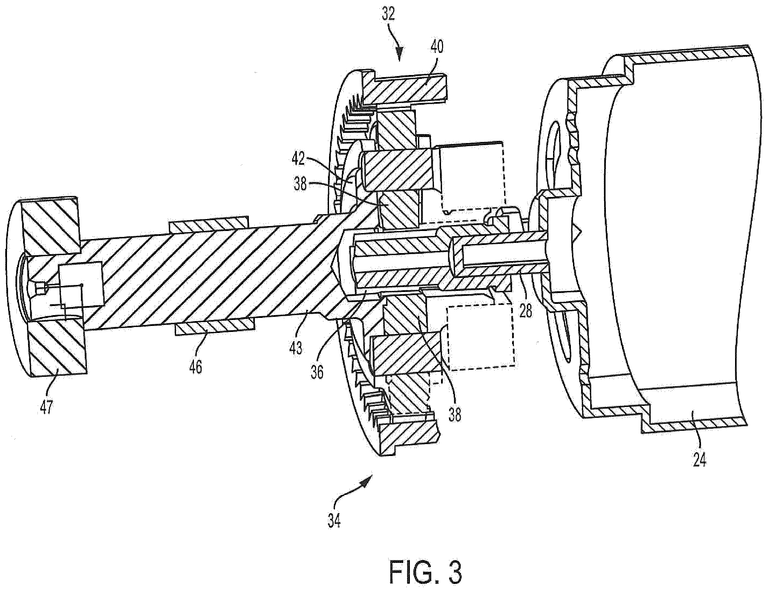

Referring also to FIG. 3 the motor 24 includes a rotatable output shaft 28, which is drivingly coupled to the speed reduction transmission 30. The transmission 30 has three stages that greatly reduce the speed and increase the torque from the output of the motor 24. The first stage 32 comprises a planetary gear set 34 having an input sun gear 36 fixed to the motor output shaft 28, a plurality of planet gears 38 that mesh with and orbit the sun gear, a stationary ring gear 40 that surrounds and meshes with the planet gears 38, and an output carrier 42 to which the planet gears 38 are pinned. The output carrier is fixed to an intermediate shaft 43. Rotation of the motor output shaft 28 and sun gear 36 at a first speed causes the planet gears 38 to orbit the sun gear 36, which in turn causes output rotation of the planet carrier 42 and the intermediate shaft 43 at a second speed, which is slower than the first speed of the sun gear 36.

The second stage 44 includes a second stage pinion gear 46 that is non-rotationally fixed to the intermediate shaft 43 so that it is driven at the same second rotational speed as the first stage output carrier 42. The intermediate shaft 46 is supported at one end by a bearing 47. The second stage pinion gear 46 drivingly meshes with a much larger second stage spur gear 48, with the pinion gear 46 and spur gear 48 having parallel axes. Rotation of the second stage pinion gear 46 at the second speed drives the second stage spur gear 48 to rotate at a third speed, which is slower than the second speed of the second stage pinion gear 46.

The third stage 50 includes a third stage pinion gear 52 non-rotationally fixed to the second stage spur gear 48 so that it is driven at the same third rotational speed as the second stage spur gear 48. The third stage pinion gear 52 drivingly meshes with a much larger third stage spur gear 54, with the pinion gear 52 and spur gear 54 having parallel axes. Rotation of the third stage pinion gear 52 at the third speed drives the third stage spur gear 54 at a fourth speed, which is slower than the third speed of the third stage pinion gear 42.

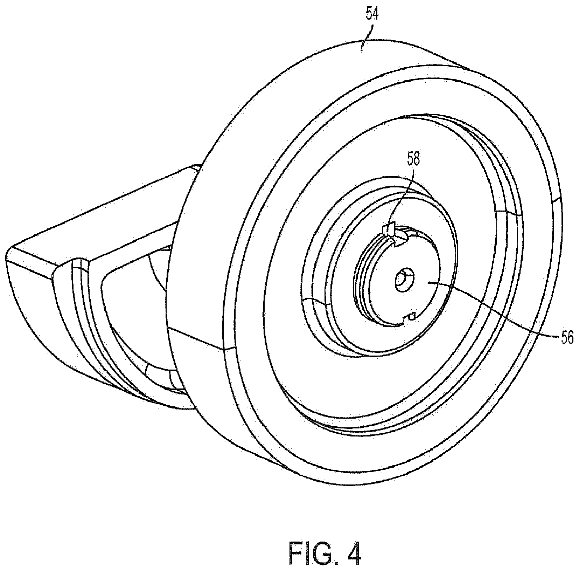

Referring also to FIG. 4, the third stage spur gear 54 is non-rotationally coupled to a transmission output shaft 56. The output shaft 56 is transmits rotational power from the transmission 30 to the cam driving mechanism 60 at the fourth rotational speed. The third stage spur gear 54 is coupled to the transmission output shaft 56 by a key 58. The key 58 is configured to shear and interrupt power transmission to the output shaft 56 if the torque encountered by the output shaft 56 exceeds a predetermined threshold value. In other embodiments, the output shaft 56 may be coupled to the third stage spur gear 54 by other mechanisms, such as a plurality of keys that shear at high torque, by a plurality of splines, or by a press-fit.

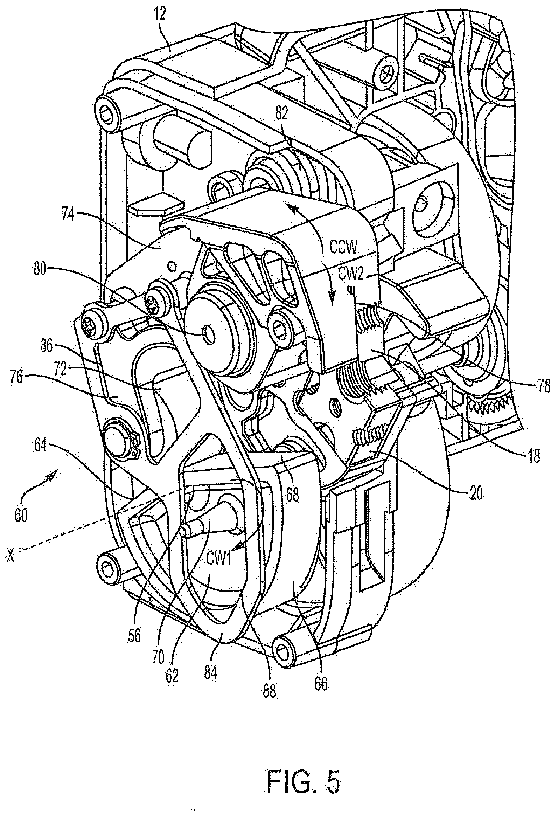

Referring to FIG. 5, the cam driving mechanism 60 converts rotational motion of the transmission output shaft 56 to the shearing motion of the movable die 18. The cam driving mechanism 60 comprises an input cam wheel 62 that is non-rotationally fixed to the transmission output shaft 56 and that rotates about an input axis X in a first clockwise direction CW1. The input cam 62 includes a driving flat surface 64, a driving arc surface 66, and a return flat surface 68. Also coupled to the input cam is an eccentric pin 70 that is mounted eccentrically relative to the input axis X. The input cam 62 abuts against an output cam follower 72. The output cam roller 72 is configured to roll along the surfaces 64, 66, 68 of the input cam 62 as the input cam 62 rotates about the input axis X.

The output cam roller 72 is mounted to a first end 76 of a lever arm 74. The moveable die 18 is mounted to a second end 78 of the lever arm 74 by a threaded bolt 75, which is inserted through a threaded bore in a rear face of the die 18 (FIG. 1). The stationary die 20 is mounted to a stationary arm 79 on the housing 12 by a threaded bolt 77, which is inserted through a rear face of the die 20 (FIG. 2). The lever arm 74 is mounted to the housing 12 to pivot about a fulcrum 80. When the lever arm 74 pivots in a second clockwise direction CW2 about the fulcrum 80, the moveable die 18 approaches and moves past the stationary die 20 in a shearing motion to cut the threaded rod 120. The lever arm 74 is coupled to the tool housing 12 by a torsional return spring 82 that biases the second end 78 of the lever arm 74 and the moveable die 18 away from the stationary die 20 in a counterclockwise direction CCW about the fulcrum 80. A return plate 84 is fixedly mounted to the first end 76 of the lever arm 74. The return plate 84 includes a first opening 86 and a second opening 88. The second opening 88 is sized and configured so that the eccentric pin 70 follows an interior edge of the second opening 88 as the input cam 62 rotates about the axis X.

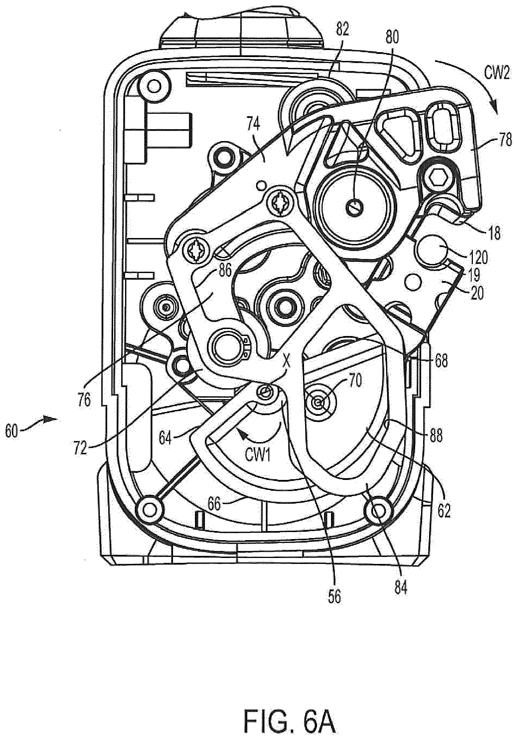

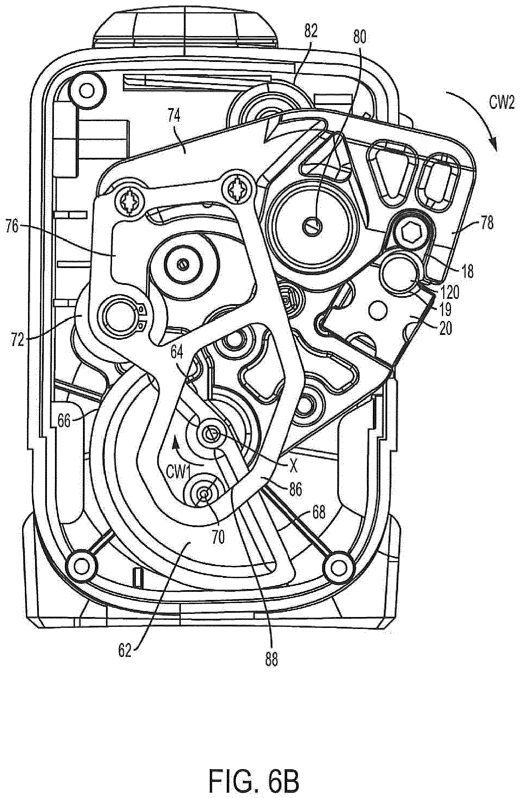

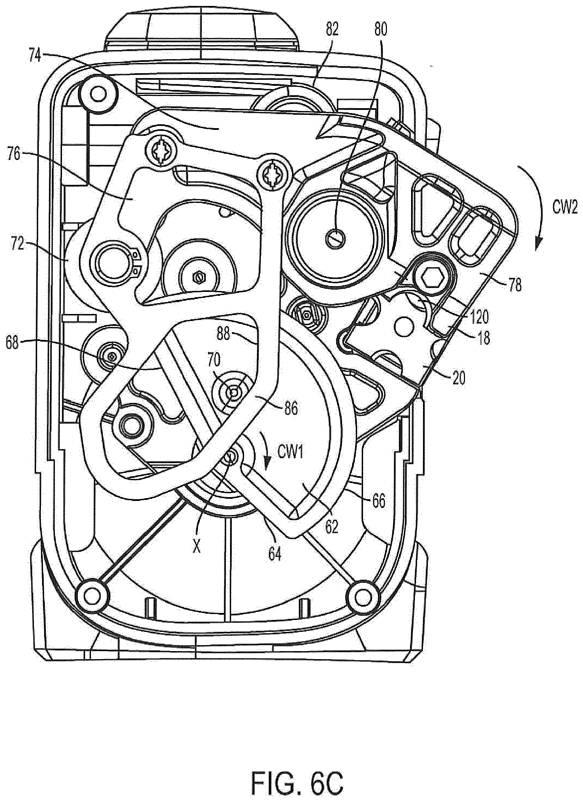

FIGS. 6A-6D illustrate the operation of the cam driving mechanism 60. Referring to FIG. 6A, at an initial open position, the moveable die 18 is fully open relative to the stationary die 20. A threaded rod 120 to be cut is placed in a recess 21 of the stationary die 20. Referring to FIG. 6B, during a driving stroke, rotation of the motor 24 is transmitted to the input cam 62 through the transmission 30. This causes the input cam 62 to rotate in the first clockwise direction CW1 about the axis X. The output cam roller 72 rolls along the driving flat 64 of the input cam wheel 62, which in turn causes the lever arm 74 to pivot in the second clockwise direction CW2 about the fulcrum 80, bringing the moveable die 20 closer to the stationary die 18. Referring to FIG. 6C, during a power stoke, the motor 24, through the transmission 30, causes the input cam 62 to continue to rotate in the clockwise direction CW1 about the axis X. The cam roller 72 rolls along the driving arc surface 66 of the input cam 62. This causes the lever arm to pivot further in the second clockwise direction CW2 about the fulcrum 80, causing the moveable die 18 to close around the threaded rod 120 and move past the stationary die 20, shearing the threaded rod 120.

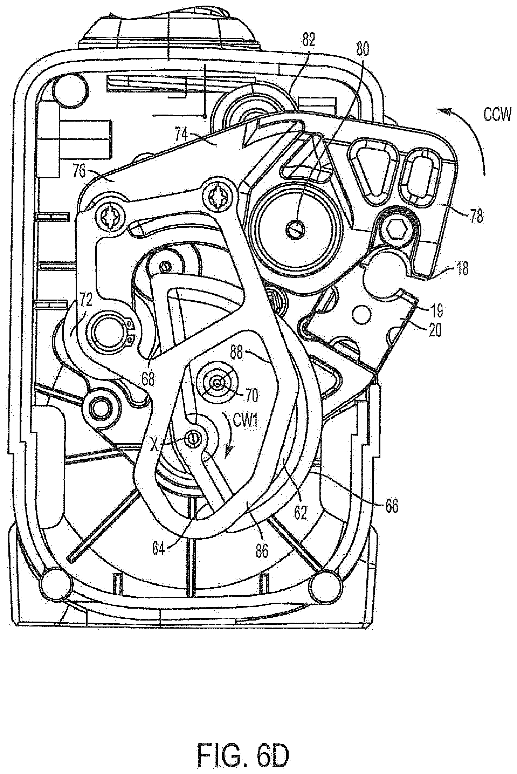

Referring to FIG. 6D, during a return stroke, the input cam 62 continues to rotate in the first clockwise direction CW1 about the axis X, which causes the cam roller 72 to roll along the return flat surface 68 of the input cam wheel 62. Under the urging of the torsional spring 82, this causes the lever arm 74 to pivot in the counterclockwise direction CCW about the fulcrum 80. This moves the moveable die 18 away from the stationary die 20 back toward the fully open position shown in FIG. 6A. If the moveable die 18 gets stuck in the closed position shown in FIG. 6C, the eccentric pin 70 also pushes against the interior edge of the second opening 88 in the plate 84, which assists the lever arm 74 to pivot in the counterclockwise direction CCW about the fulcrum 80.

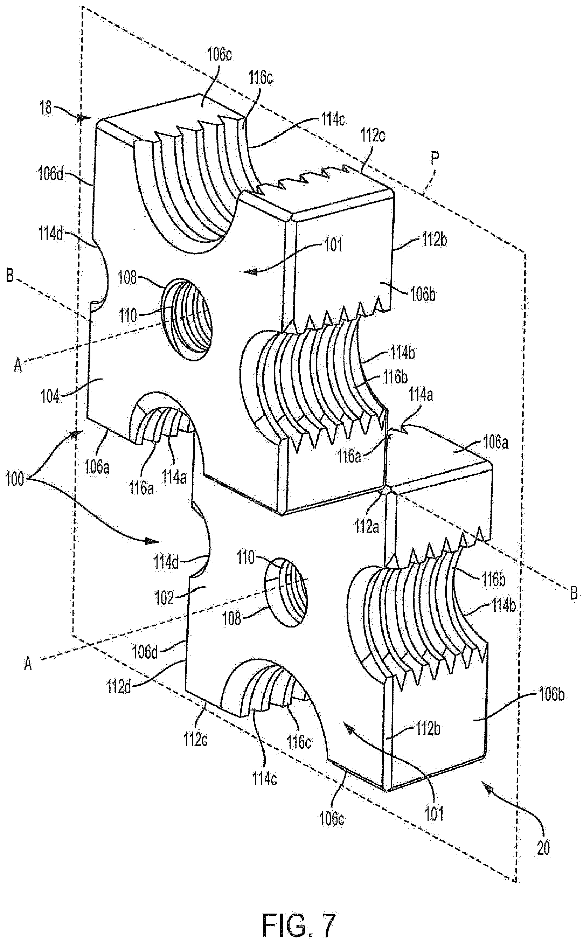

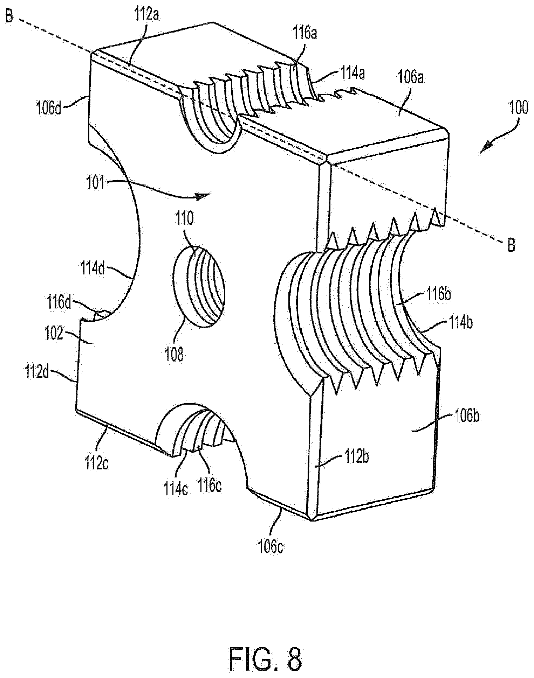

Referring to FIGS. 7-11, in an example, the dies 18 and 20 are identical and reversible so that the moveable die 18 can be installed as the stationary die 20 and vice versa. For convenience, only one such die 100 will be described in detail. Each die 100 has a body 101 with a generally polyhedral shape, e.g., a square or rectangular prismatic shape. Each die 100 has a front cutting face 102 and a rear face 104 that are generally parallel to each other. A plurality of side faces 106a-106d (e.g., four side faces) extend between the front face 102 and the rear face 104, substantially perpendicular to the front face 102 and to the rear face 104. Each die 100 has cutting edges 112a-112d at the edges defined by the junctions between the side faces 106a-106d and the front cutting face 102.

Each of the side faces 106a-106d defines an arcuate recess 114a-114d for receiving the threaded rod 120. Each arcuate recess 114a-114d has a partially cylindrical shape (e.g., half of a cylinder) that extends from the cutting face 102 to the rear face 140, and is threaded along its length by a thread 116a-116d. The radius of each recess 114a-114d is sized to receive a threaded rod of a corresponding diameter, while the pitch and size of the thread 116a-116d is configured to correspond to a thread pitch and size on the threaded rod 120. In an embodiment, one or more of the recesses 114a-114d may have different sizes and/or thread pitches to accommodate different sized or configured threaded rods. Thus, the dies 100 can be rotated and mounted at different angular positions on the lever arrm 74 and stationary arm 79 (as described above) in order to cut a plurality of different sized threaded rods. In this manner, the dies 100 function to cut a variety of sizes of threaded rods.

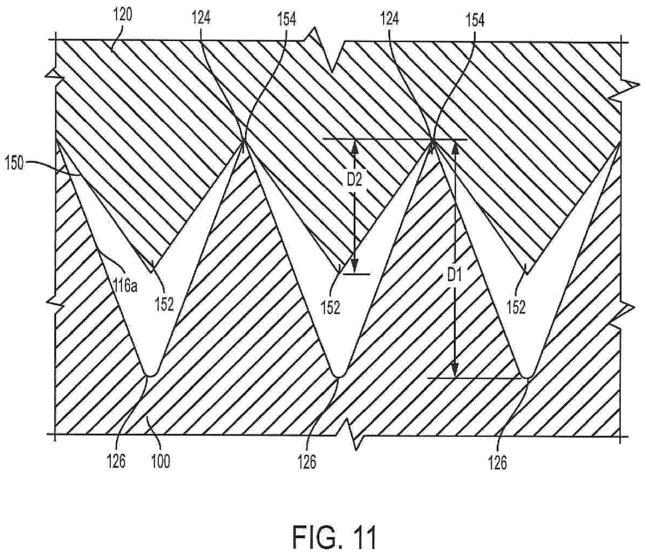

Referring to FIG. 11, a thread 116a on the die 100 has a thread crest 124 and a thread trough 126 configured differently than a thread crest 152 and thread tough 154 of the threaded rod 120, in order to make a cleaner cut in the threaded rod. For example, as shown schematically in FIG. 11, the thread trough 126 of the thread 116a on the die 100 may have a depth D1 (as measured from the thread crest 124) that is greater than a depth D2 of the thread trough 154 of the thread 150 of the threaded rod (as measured from the thread crest 152). The allows the thread crest 124 of the die 100 to engage the thread trough 154 of the threaded rod while preventing the thread trough 126 of the die 100 from engaging the thread crest 152 of the threaded rod. It is believed that this results in a cleaner cut to the threaded rod because the thread crests 124 of the cutting dies 100 concentrate the cutting forces at the thread roots 154 of the threaded rod 120, leaving the thread crests 152 of the threaded rod 120 less disturbed.

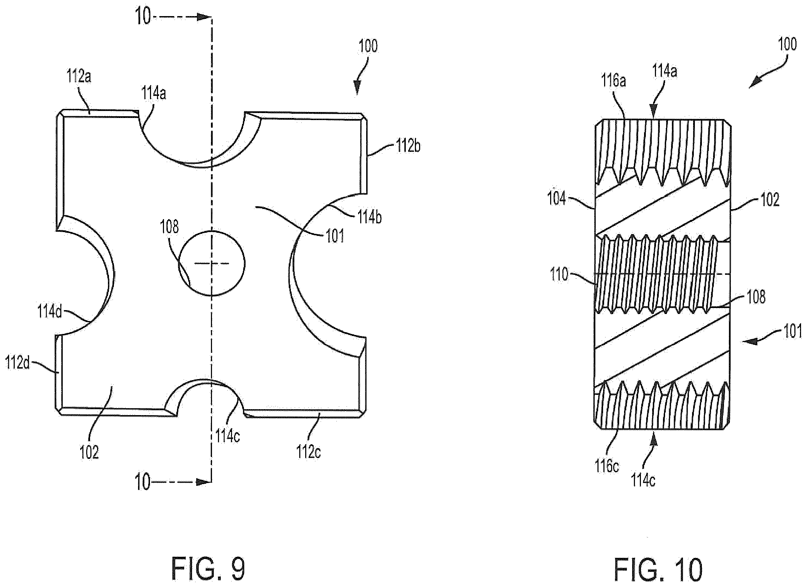

Referring to FIG. 10, each die 100 has a fastener receiver (e.g., a through bore 108) that is configured to be coupled to a fastener (e.g., mounting bolts 75, 77) on the threaded rod cutting machine. The bore 108 extends through a center of the body 101 from the front face 102 to the rear face 104 along a center axis A that is substantially perpendicular to the front face 102 and to the rear face 104. The bore 108 is partially threaded by a thread 110 that starts at the rear face 104 but that terminates before reaching the front face 102. Because of this partial thread, the threaded mounting bolts 75, 77 on the arms 72, 79 can only be inserted in one direction through the die 100, starting at the rear face 104 of the die 100. Thus, the dies 18, 20 can only be installed in the threaded cutting tool with their rear faces 104 facing their respective arms 74, 79. This prevents the dies 100 from inadvertently being installed backwards on the arms 74, 79.

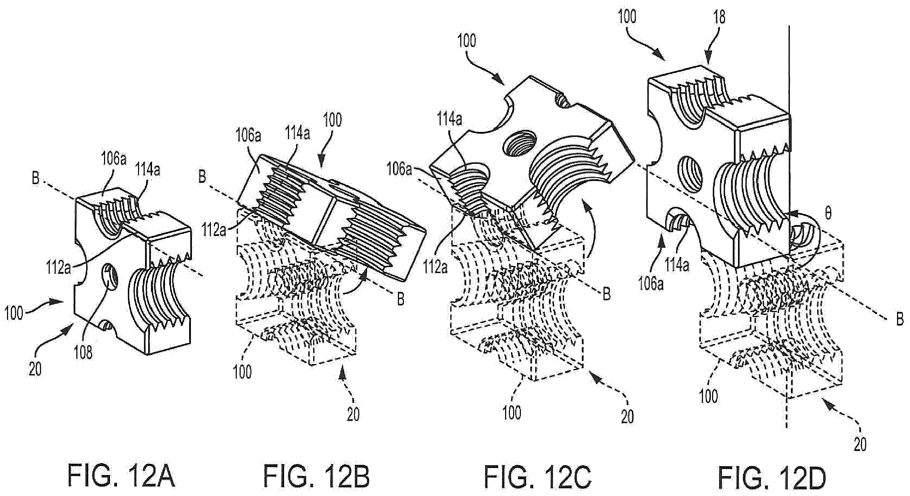

Referring to FIG. 7 and FIGS. 12A-12D, as discussed above, each of a pair of identical dies 100 may be installed in the position of the stationary die 20 and/or in the position of the moveable die 18. The side faces, cutting edges, and arcuate recesses that face each other are said to be the active side faces, cutting edges, and arcuate recesses. The dies 100 can be installed on the arms 72, 79 at different angular positions so that each of the cutting edges, side faces and recesses can be active. As illustrated in FIGS. 7 and 12A-12D, the side face 106a, the cutting edge 112a and the annular recesses 114a of the die 100 are active. However, it should be understood that any of the side faces, cutting edges and annular recesses of the cutting die 100 may be made active by rotating the die 100 about the threaded bore 108. To move the die 100 between the stationary die position 20 and the moveable die position 18, the die 100 can be rotated about a rotation axis B that is located along or parallel to the active cutting edge of the die 100. In this example, the die 100 can be rotated by an angle θ of approximately 180 degrees about the axis B between the position of the stationary die 20 and the position of the moveable die 18.

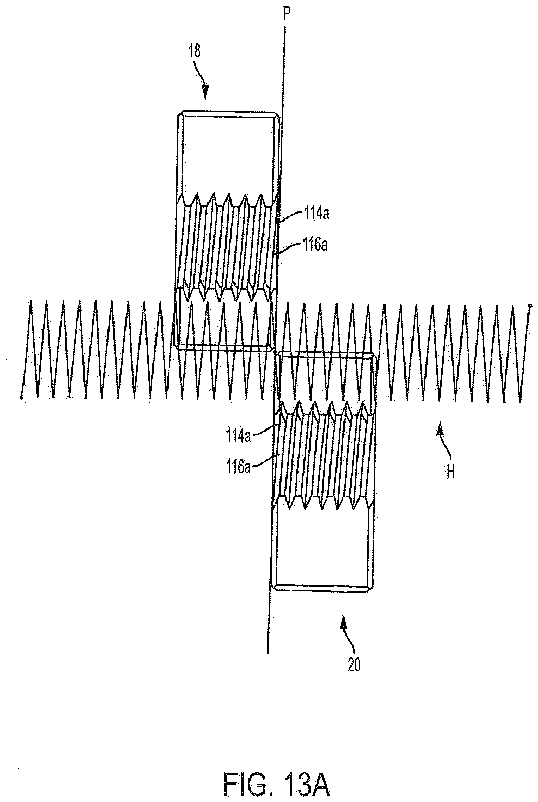

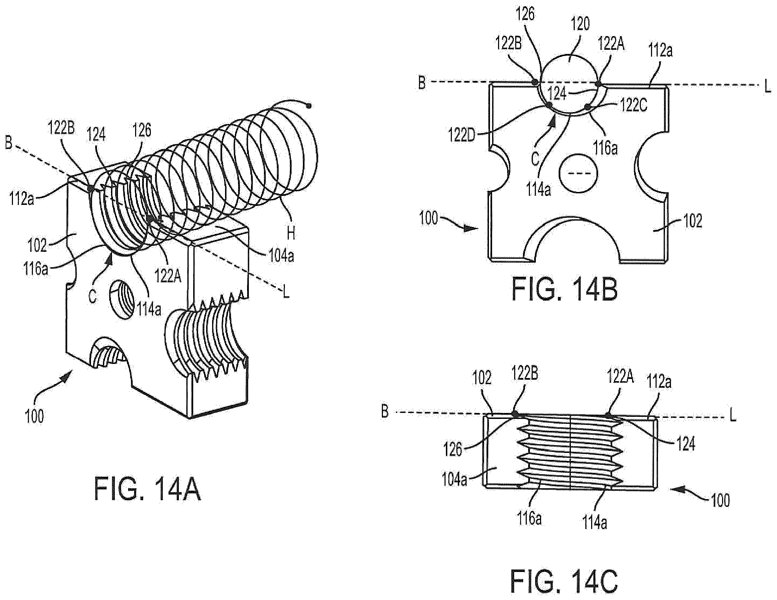

Referring to FIGS. 7 and 13A, to obtain a clean cut of a threaded rod, the front cutting faces 102 of the dies 18, 20 should substantially lie in a common cutting plane P so that the front cutting faces 102 do not overlap and are not substantially spaced apart. Referring also to FIGS. 14A-14C, in order to achieve this optimal positioning of the dies 18. 20 with their front cutting faces 102 substantially in a common plane P, the helical paths H traced by the threads 116a of the active recess 114a should be as close as possible to continuous as possible when the dies are closed about the threaded rod 120. In order to trace such a continuous helical path H, the starting points of the threads 116a of the active recesses 114a on the stationary die and the moveable die should substantially coincide or touch each other when the dies are closed around a threaded rod to be cut so that the path of the thread is continuous around the threaded rod. In particular, the threads 116a of the active recesses 114a on each of the dies each should have an actual or theoretical starting point that substantially coincides with a line L that bisects the threaded rod 120 when the dies are closed about the threaded rod 120. In this embodiment, the line L happens to coincide with the rotation axis B about which the die 100 is rotated between the position of the stationary die 20 and the position of the moveable die 18. In addition, because the active recess 114a is a half-cylinder, the line L also coincides with the active cutting edge 112a of the die 100.

In this example, the thread crest 124 or the thread trough 126 of the die 100 has an actual starting point that lies in the plane of the front cutting face 102 along a circumference C of the recess 116a that intersects the line L. It should be noted that this means that there are two possible starting points 122A, 122B for the thread crest 126 or threaded trough 126. In this embodiment, because the arcuate recess 112a is a half-cylinder, the actual starting points 122A, 122B are positioned along the cutting edge 112a and in the plane of the active side face 104a. In this embodiment, the thread crest 124 begins at starting point 122A and the thread trough 126 begins at starting point 122B. In alternative embodiments, only the thread trough 126 may begin at starting point 122A or starting point 122B, only the thread crest 124 may begin at starting point 122A or starting point 122B, or the thread crest 124 may begin at starting point 122B and the thread trough 126 may begin at starting point 122A. This also enables the die 100 to be reversibly attachable as either the moveable die 18 or the stationary die 20 because the starting points on the two dies will always substantially coincide.

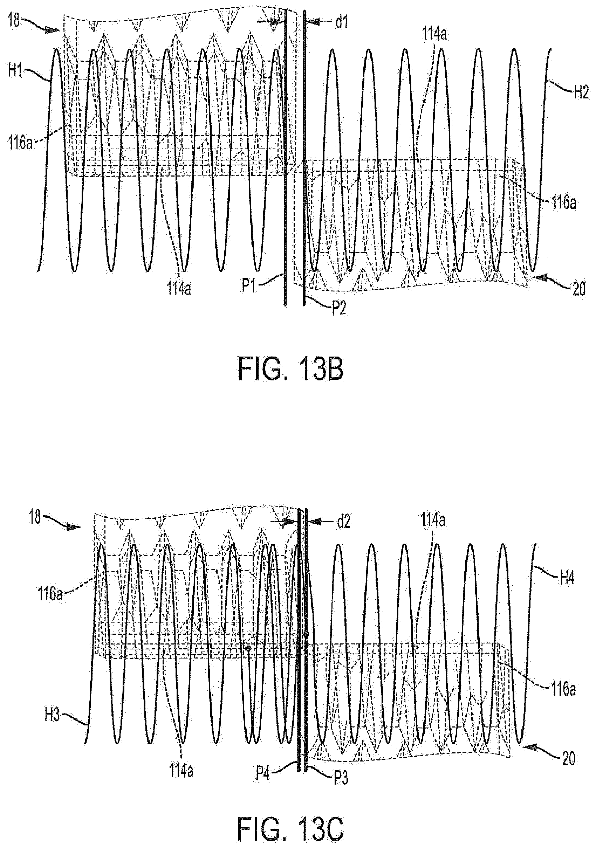

Referring also to FIGS. 13B and 13C, if the starting points of the thread crest 124 or the thread trough 126 are not positioned at the optimal starting points 122A or 122B, the threads 116a of the active recesses 114a will not follow the desired continuous helical path H. For example, if the thread crest 124 has a starting point at 122C that is offset from the optimal starting point 122A by approximately 45 degrees (as shown in FIG. 14B), then, as shown in FIG. 13B, the helical paths H1 and H2 traced the threads 116a of dies 18, 20 will be spaced apart by a distance d1. This will result in the cutting faces 102 of the dies 18, 20 being in planes P1 and P2 that are spaced apart by the distance d1, resulting in a poor cut to the threaded rod. In another example, if the thread crest 124 has a starting point at 122D that is offset from the optimal starting point 122A by approximately 135 degrees (as shown in FIG. 14B), then, as shown in FIG. 13C, the helical paths H3 and H4 traced the threads 116a of dies 18, 20 will overlap by a distance d2. This will result in the cutting faces 102 of the dies 18, 20 being in planes P3 and P4 that overlap by the distance d2, resulting in the dies hitting each other upon cutting and resulting in a poor cut to the threaded rod. Thus, if the threads 116a do not start at the optimal starting points, the die 100 will not be reversibly attachable as either the moveable die 18 or stationary die 20 without adversely affecting the quality of the cut to the threaded rod.

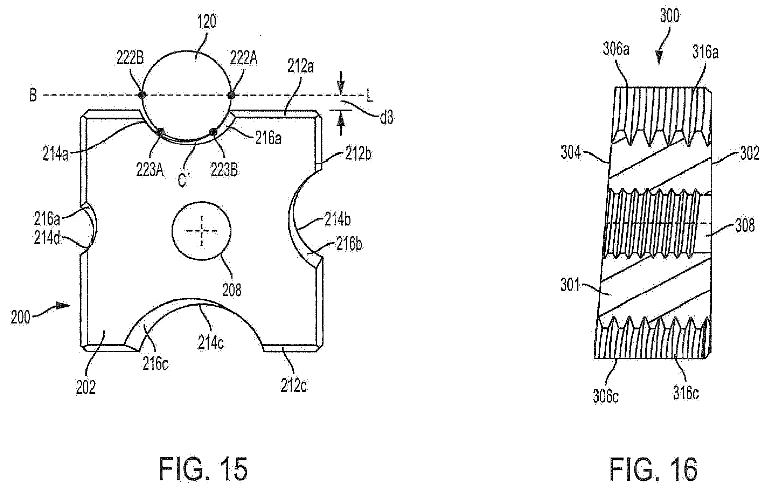

Referring to FIG. 16, in another example, a die 200 has a generally polyhedral body 201, a front cutting face 202, a rear face (not shown), and a plurality of side faces (not shown) extending between the front face 202 and the rear face. The die 200 has cutting edges 212a-212d at the edges defined by the junctions between the side faces and the front cutting face 202. Each of the side faces defines an arcuate recess 214a-214d with a thread 216a-216d for receiving the threaded rod 120. Unlike the die 100, in the die 200, the arcuate recesses 214a-214d each have a partially cylindrical shape that is less than half of a cylinder. Thus, the line L that bisects the threaded rod 120 (and the rotation axis B' about which the die 200 is rotatable between the stationary die position and the moveable die position) are disposed a distance d3 away from the active cutting edge 212a.

In order to achieve optimal positioning of the dies 200 with their front cutting faces 202 in substantially in a common plane, the thread crest or thread trough of the thread 216a will have a theoretical starting point 222A or 222B along a circumference C' of the arcuate recess 214a that intersects the bisecting line L'. In the illustrated embodiment, the thread crest has a theoretical starting point 222A and the thread trough has a theoretical starting point 224B. It should be noted that an actual starting point 223A for the thread crest will be at a point where the adjacent thread crest intersects the front cutting face 202, and an actual starting point 223B for the thread through will be at a point where the adjacent thread trough intersects the front cutting face 202. In alternative embodiments, only the thread trough may begin at the theoretical starting point 222A or the theoretical starting point 222B, only the thread crest may begin at the theoretical starting point 222A or the theoretical starting point 222B, or the thread crest may begin at the theoretical starting point 222B and the thread trough may begin at the theoretical starting point 222A. In these alternative embodiments, the actual starting points will be at the point where the adjacent thread crest or thread trough intersects the front cutting face 202.

Referring to FIG. 16, in an alternative example, a die 300 may include a body 301 having a front cutting face 302, a rear face 304, and a plurality of side faces 306a, 306c extending between the front cutting face 302 and the rear face 304. Each of the side faces 306a, 306c define a threaded annular recess 316a, 316c for receiving a threaded rod. A partially threaded central bore 308 extends through the body 301. The die 300 differs from the die 100 in that the rear face 304 is transverse to the front cutting face 302. Thus, the die 300 has a non-prismatic polyhedral shape.

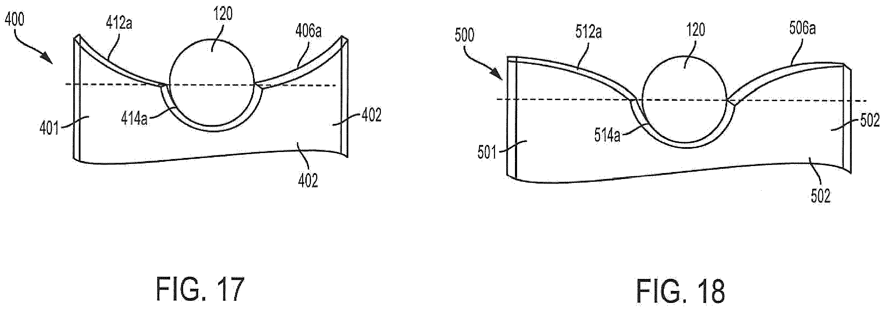

Referring to FIGS. 17 and 18, in two other alternative example dies 400 and 500 each have a body 401, 501 with a front cutting face 402, 502, a rear face (not shown), and at least one side face 406a, 506a extending between the front cutting face 402, 502 and the rear face. The side faces 406a, 506a each define a threaded arcuate recess 414a, 514a configured to receive a threaded rod 120. Each die 400, 500 has a cutting edge 412a, 512a at the junction between the front cutting face 402, 502 and the side face 406a, 506a. The dies 400, 500 differ from the die 100 in that the side faces 406a, 506a and the cutting edges 412a, 512a are curved instead of straight such that the dies 400, 500 have a curved polyhedral shape. In particular, the side face 406a and cutting edge 412a of die 400 has a concave curvature, while the side face 506a and cutting edge 512a of the die 500 has a convex curvature.

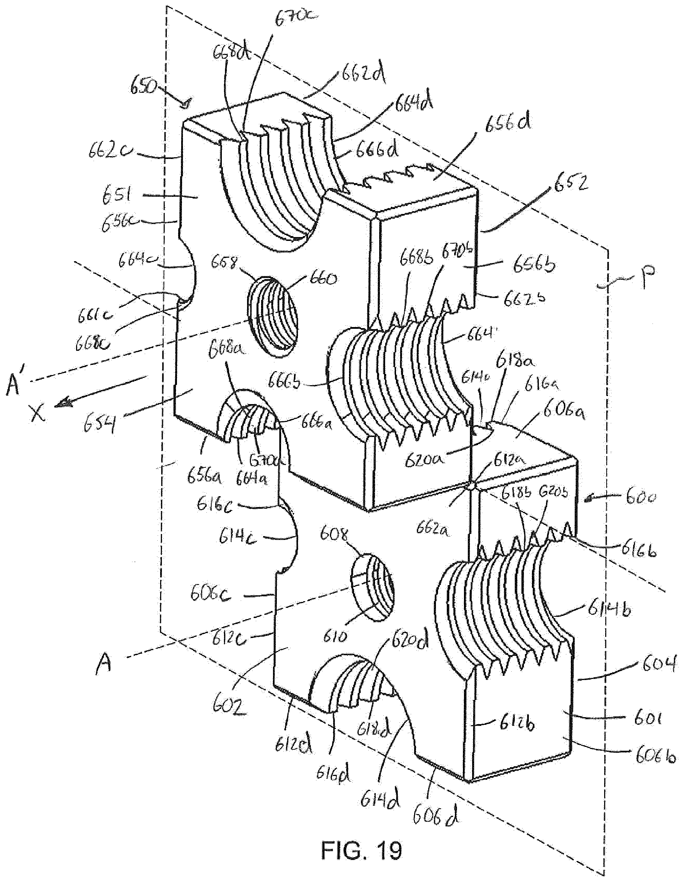

Referring to FIG. 19, in an embodiment of the present invention, a set of dies includes a first stationary die 600 and a second moveable die 650. Each die 600, 650 has a body 601, 651 with a generally polyhedral shape, e.g., a square or rectangular prismatic shape. Each die 600, 650 has a front cutting face 602, 652 and a rear face 604, 654 that are generally parallel to each other. A plurality of side faces 606a-606d and 656a-656d (e.g., four side faces) extend between each front face 602, 652 and each rear face 604, 654, substantially perpendicular to the front face 602, 652 and to the rear face 604, 654. Each die 600, 656 has cutting edges 612a-612d and 662a-662d at the edges defined by the junctions between the side faces 606a-606d, 656a-656d and each front cutting face 602, 652. To obtain a clean cut of a threaded rod, the front cutting faces 602, 652 of the dies 600, 650 substantially lie in a common cutting plane P so that the front cutting faces do not overlap and are not substantially spaced apart. When cutting the moveable die 652 tends to be forced slightly away from the stationary die 602 in a direction X that is perpendicular to the plane P and parallel to the threaded rod so that the dies 602, 652 do not abut with and interfere with one another.

Each of the side faces 606a-606d and 652a-652d defines an arcuate recess 614a-614d and 664a-664d for receiving a threaded rod. Each arcuate recess 614a-614d and 664a-664d has a partially cylindrical shape (e.g., half of a cylinder) that extends from the front face 602, 652 to the rear face 604, 654, and is threaded along its length by a thread 616a-616d and 666a-666d. Each thread 616a-616d and 666a-666d includes a series of crests 618a-618d and 668a-668d and troughs 620a-620d and 670a-670d. The radius of each recess 614a-614d and 664a-664d is sized to receive a threaded rod of a corresponding diameter, while the pitch and size of the thread 616a-616d and 666a-666d is configured to correspond to a pitch and size of the thread on the threaded rod to be cut. In an embodiment, one or more of the recesses 614a-614d and 664a-664d may have different sizes and/or thread pitches to accommodate different sized or configured threaded rods. Thus, the dies 600, 650 can be rotated and mounted at different angular positions on the stationary arm 79 and the lever arm 74 in order to cut a plurality of different sized threaded rods, as described above.

Each die 600 also has a fastener receiver (e.g., a through bore 608, 658) that is configured to be coupled to a fastener (e.g., mounting bolts 75, 77) on the threaded rod cutting machine. Each bore 608, 658 extends through a center of the body 601, 651 from the front face 602, 652 to the rear face 604, 654 along a center axis A, A' that is substantially perpendicular to the front face 602, 652 and to the rear face 604, 654. Each bore 608, 658 is partially threaded by a thread 610, 660 that starts at the rear face 604, 654 but that terminates before reaching the front face 602, 652. Because of this partial thread, the threaded mounting bolts 75, 77 on the arms 74, 79 can only be inserted in one direction through each die 600, 650, starting at the rear face 604, 654 of each die 600, 650. Thus, the dies 600, 650 can only be installed in the threaded cutting tool with their rear faces 604, 654 facing their respective arms 72, 79. This prevents the dies 600, 650 from inadvertently being installed backwards on the arms 72, 79.

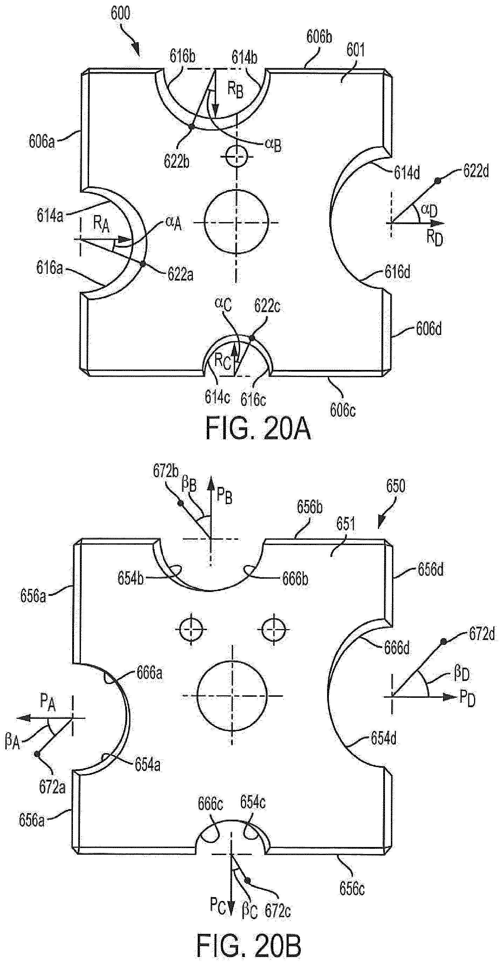

Referring also to FIGS. 20A and 20B, the first trough 620a-620d of each thread 616a-616d of the stationary die 600 has a starting point 622a-622d where the first trough 620a-620d intersects a plane of the front face 602. It should be noted that some of the starting points (e.g., 622d) may be theoretical starting points located away from the actual arcuate recess 614a-614d. Each thread 616a-616d extends from the starting point 622a-622d in a clockwise direction toward the corresponding side face 606a-606d. Each starting point 622a-622d can be identified by an angle α_{A}- α_{D} measured relative to a radius Ra-Rd that bisects the corresponding recess 614a-614d. The first trough 670a-670d of each thread 666a-666d of the moveable die 650 has a starting point 672a-672d where the first crest 668a-668d intersects a plane of the front face 652. In the disclosed embodiment, the starting points are theoretical starting points located away from the actual arcuate recess 654a-654d, but that is not required. Each thread 666a-666d extends from the starting point 672a-672d in a clockwise direction toward the corresponding side face 656a-656d. Each starting point 672a-672d can be identified by an angle β_{A}- β_{D} measured relative to measured relative to a radius Pa-Pd that bisects the corresponding recess 614a-614d.

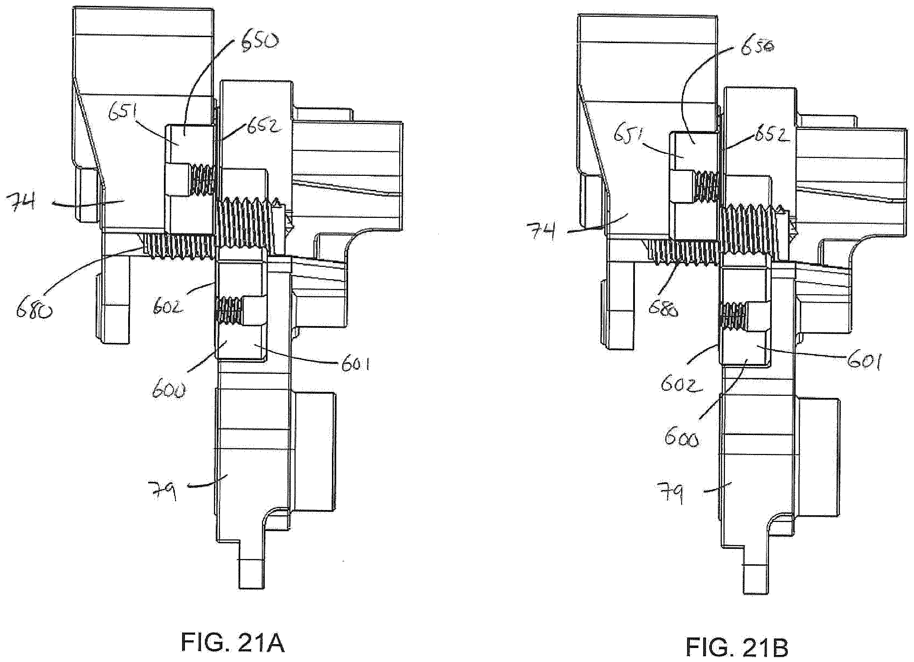

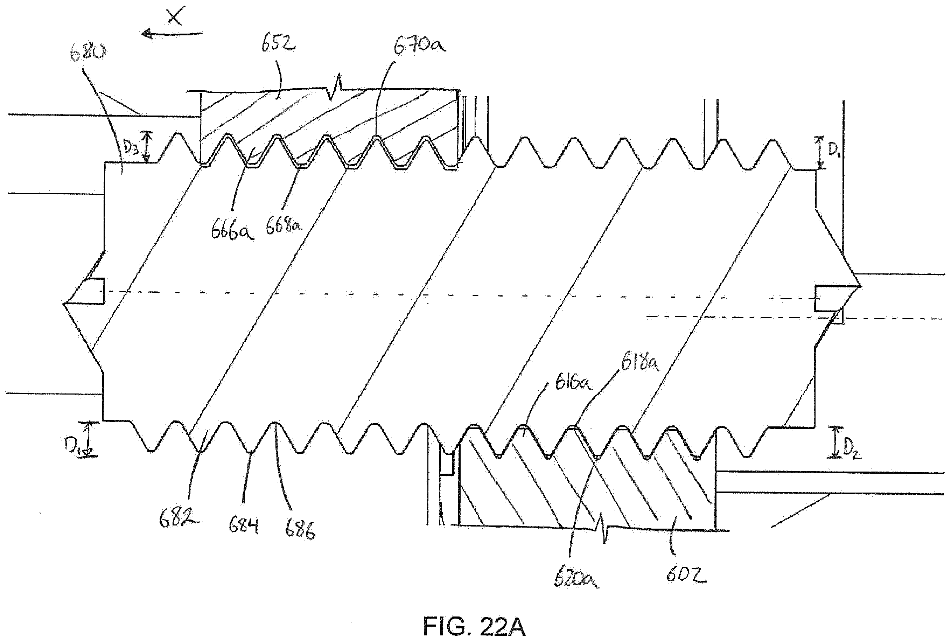

Referring also to FIGS. 21A and 22A, for each of the three smaller diameter (e.g., less than 1.27 cm (½ inch)) recesses 614a-614c and 654a-654c, the starting points 622a-622c and 672a-672c of the threads 616a-616c and 666a-666c are arranged so that the helical paths traced by the threads 616a-616c of the stationary die 602 and the threads 666a-666c of the moveable die 652 are as close as possible to continuous. In order to trace a continuous helical path, the starting points 622a-622c of the smaller diameter threads 616a-616c on the stationary die 602 are selected to almost coincide with the starting points 672a-627c of the smaller diameter threads 666a-666c on the moveable die 652 when the moveable die 652 has been inverted, coupled to the arm 74, and closed on the threaded rod. In one example, the starting points 622a-622c of the smaller diameter threads 616a-616c on the stationary die 602 are positioned at acute angles α_{A}-α_{C} (e.g., approximately 10°-30°) relative to a radius Ra-Rc that extends inward from the side face 606a-606c and bisects the recess 614a-614c, while the starting points 672a-672c of the smaller diameter threads 666a-666c on the moveable die 652 are positioned at acute angles β_{A}-β_{C} (e.g., approximately 30°-50°) relative to a radius Pa-Pc that extends outward from the side face 656a-656c and bisects the recess 654a-654c. When the dies 602, 652 are closed about a threaded rod 680, the crests 618a-618c and troughs 620a-620c of the smaller diameter threads 616a-616c on the stationary die 602 and the crests 668a-668c and troughs 670a-670c of the threads all engage the crests 684 and troughs 686 of the thread 682 on the threaded rod 680. In addition, the thread depth D2, D3 of the threads 616a-616c and 666a-666c is substantially the same as the thread depth D1 of the threaded rod 680. As the dies 602, 652 start to shear the threaded rod 680, the moveable die 652 is biased slightly away from the stationary die in a direction X parallel to the threaded rod 680 so that the dies 602, 652 do not interfere with one another during cutting.

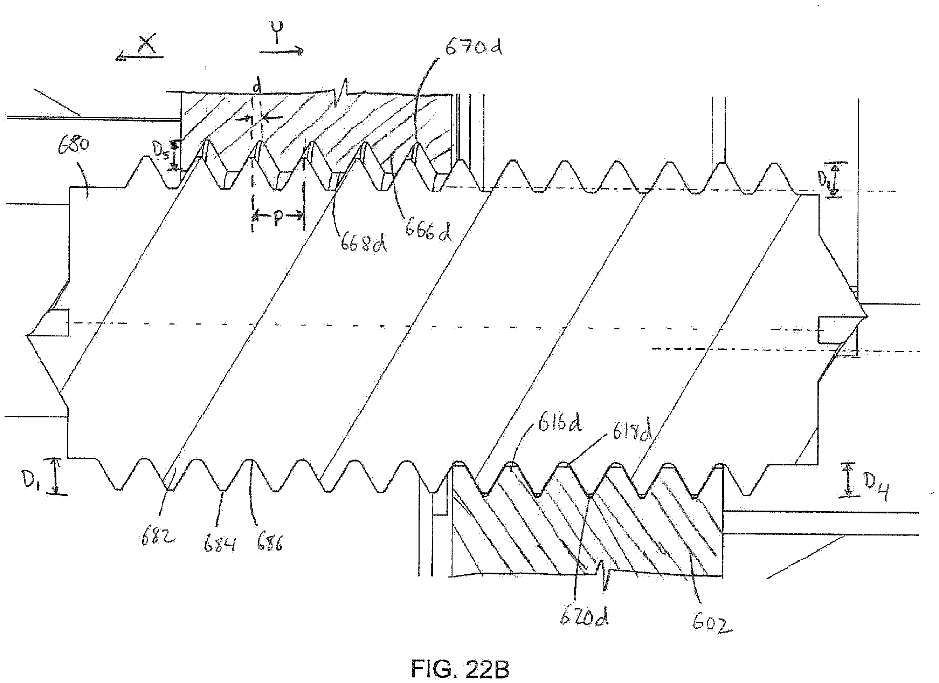

Referring also to FIGS. 21B and 22B, when cutting larger diameter threaded rods (e.g., 1.27 cm (½ inch) and greater), the threaded rod cutting machine exerts a greater force biasing the moveable die 652 away from the stationary die 602 in the direction X along the threaded rod 680, resulting in poor cut quality with burrs on the cut surface. To counteract this biasing force, the starting points 622d and 672d of the threads 616d and 666d on the dies 602, 606 are arranged so that the helical paths traced by the thread 622d of the stationary die 602 and the thread 666d of the moveable die 652 are discontinuous. The starting point 622d of the larger diameter thread 616d on the stationary die 602 is selected to not coincide with the starting point 672d of the larger diameter thread 666d on the moveable die 652. In one example, the starting point 622d of the larger diameter thread 616d on the stationary die 602 is positioned at an acute angle α_{D} (e.g., approximately 45°-65°) relative to a radius Rd that extends outward from the side face 606d and bisects the recess 614d, while the starting point 672d of the larger diameter thread 666d on the moveable die 652 is positioned at an angle β_{D} (e.g., approximately 45°-65°) relative to a radius Pd that extends outward from the side face 656d and bisects the recess 654d. The angles α_{D} and β_{D} may be (although are not required to be) approximately equal to each other so that the dies 602, 652 are reversible. When the dies 602, 652 are closed about a threaded rod 680, the crests 618d and troughs 620d of the larger diameter thread 616d on the stationary die 602 engage the crests 684 and troughs 686 of the thread 682 on the threaded rod 680, but the crests 668d and troughs 670d of the thread 666d on the moveable die 652 are offset from the crests 684 and troughs 686 of the thread 682 on the threaded rod 680 in a direction Y (opposite to direction X) parallel to the threaded rod 680. The offset distance d is less than the pitch p of the thread 682 of the threaded rod 608. This offset causes the moveable die 652 to be biased in the direction Y to counteract the biasing force exerted by the threaded rod cutting machine in the direction X, resulting in a cleaner cut. In addition, the thread depths D4, D5 of the thread 616d and the thread 666d are substantially the same as the thread depth D1 of the threaded rod 680.

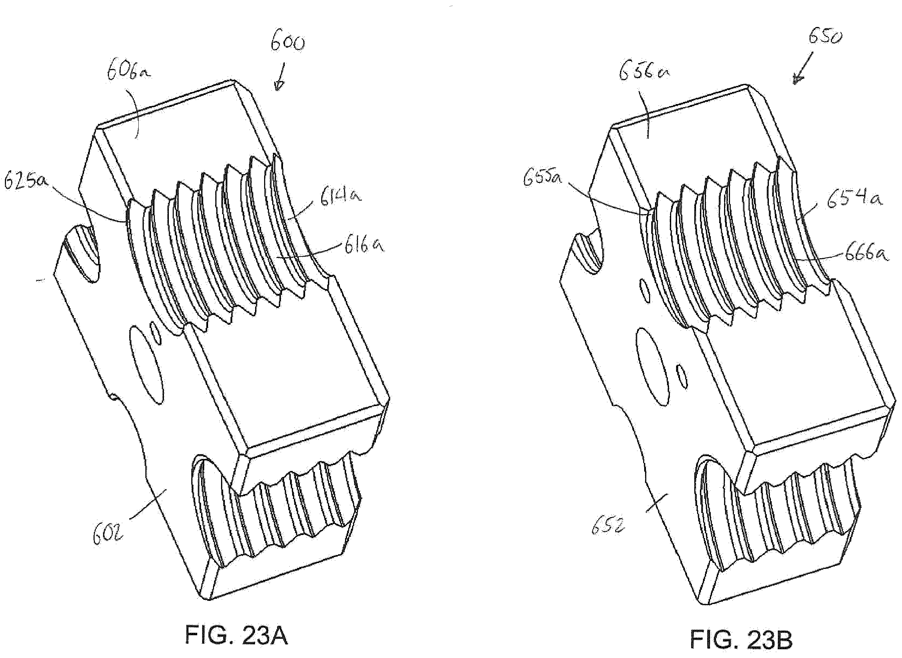

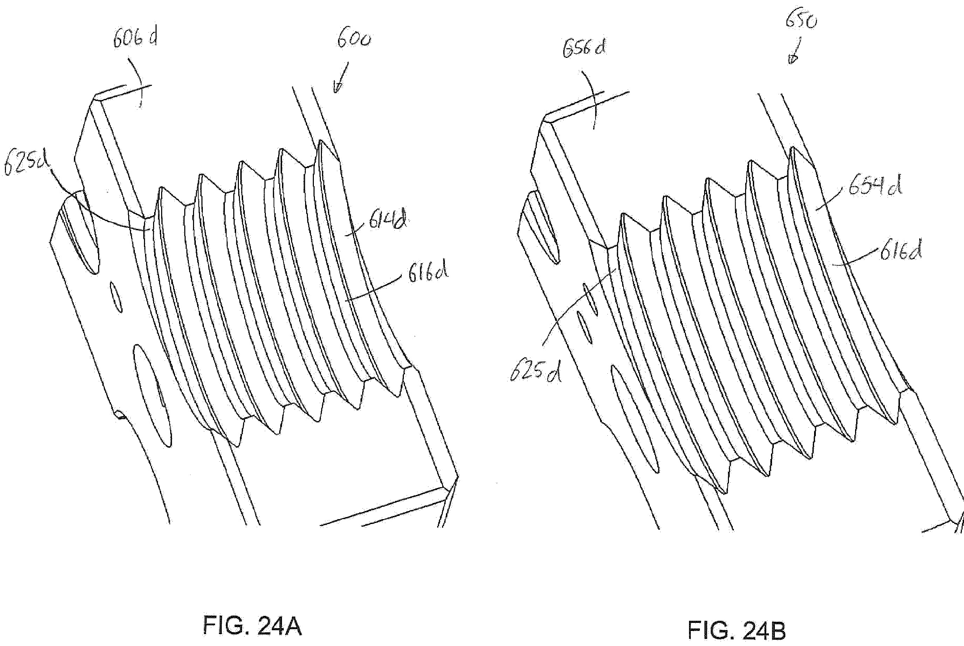

A beneficial byproduct of making the threads of the moveable die offset from the threads on the threaded rod is that it enables the first thread on both dies to be thicker. As shown in FIGS. 23A-23B, for the smaller diameter recesses 614a and 654a, the starting point 622a of the thread 616a on the stationary die 600 results in a very thin first thread 625a, while the starting point 672a of the thread 666a on the moveable die 650 results in much thicker first thread 655a. The thinner first thread 625a on the stationary die 600 is believed to contribute to reduced die life. However, it is not possible to have both first threads be thick and still have both dies be aligned with the threads on the threaded rod so that the helical paths traced by both threads are continuous. In contrast, as shown in FIGS. 24A-24B, for the larger diameter recesses 614d and 654d, the starting points 622d, 672d of the threads 616d, 666d on both the stationary die 600 and the moveable die 650 result in both dies having a relatively thick first thread 625d, 655d. This thicker first thread on both dies is achievable only because the moveable die is offset from the threads on the threaded rod and discontinuous from the thread on the stationary die.

Having thicker first threads 625d, 655d on both dies results in a significant, and unexpected, increase in the life of both dies (especially the moveable die) as compared to dies that do not have thicker first threads on both dies. As shown in the below table, the number of cuts that can be performed using dies having a thicker first thread on both dies is dramatically greater than the number of cuts that can be performed using dies where only one die has a thicker first thread. The following table shows the results of nine samples of each set of dies, used to cut 1.27 cm (½ inch) threaded rod using the threaded rod cutting machine described above.

| **Sample** | **Single Die Has Thicker First Thread (# cuts)** | **Both Dies Have Thicker First Thread (# cuts)** |
|---|---|---|
| 1 | 300 | 4250 |
| 2 | 520 | 4600 |
| 3 | 680 | 4850 |
| 4 | 700 | 3900 |
| 5 | 710 | 4400 |
| 6 | 750 | 7200 |
| 7 | 1180 | 7200 |
| 8 | 1780 | 8150 |
| 9 | 820 | 4900 |
| **Avg.** | **827** | **5294** |

As shown in the above table, a design with both dies having a thicker first thread resulted in an increased die life, on average, of approximately 6.6 times as compared to a design with only a single die having a thicker first thread. This increase was a significant and unexpected byproduct of offsetting the moveable die to improve the cut quality.

Numerous modifications may be made to the exemplary implementations described above, within the scope of the following claims.

## Claims

1. A machine for cutting threaded rods, the machine having a set of dies (602, 652) and a pair of arms (74, 79) each configured to hold one of the dies (602, 652), at least one of the arms (74, 79) being moveable relative to the other arm (74, 79) to cause the dies (602, 652) to shear a threaded rod, the set of dies (602, 652) comprising:
a first die (602) having a first body (601) with a first front face (602), a first rear face (604), a first side face (606) extending between the first front face (602) and the first rear face (604), and a first threaded arcuate recess (614) with a first thread (616) defined in the first side face (606) and is configured to receive a portion of a first threaded rod to be cut, wherein crests (618) and troughs (620) of the first thread (616) are aligned with troughs and crests of a thread of the first threaded rod when the first die (602) engages the first threaded rod; and
a second die (652) having a second body (651) with a second front face (652), a second side face (656) extending between the second front face, and a second rear face (654), and a second threaded arcuate recess (664) with a second thread (666) defined in the second side (665) face (656) and configured to receive a portion of the first threaded rod to be cut, wherein the first front face (602) of the first die (602) and the second front face (652) of the second die (652) substantially lie in a common cutting plane P so that the front faces (602, 652) do not overlap and are not substantially spaced apart, **characterised in that** crests (668) and troughs (670) of the second thread (666) are axially offset from troughs (620) and crests (618) of the thread of the first threaded rod when the second die (652) engages the first threaded rod.

2. The machine of claim 1, wherein the first thread (616) has a first trough (620) starting point substantially in the plane P of the first front face (602) and the second thread (666) has a second trough (670) starting point substantially in the plane P of the second front face (652), the first and second trough (670, 620) starting points located such that the first and second threads (616, 666) form a discontinuous helical path when the first and second dies (602, 652) are closed around the first threaded rod.

3. The machine of claim 2, wherein the first trough (620) starting point is spaced from the first die(602) at a first acute angle in a counter-clockwise direction relative to a first radius that extends outward from the first side face (606) and bisects the first recess (614), and the second starting point is located at a second acute angle in a counter-clockwise direction relative to a second recess (664) that extends outward from the second side face (656) and bisects the second recess (664).

4. The machine of claim 3, wherein the first angle is approximately equal to the second angle so that the first die (602) is interchangeable with the second die (652).

5. The machine of claim 1, wherein
the first die (602) further comprises a third side face (606) extending between the first front face (602) and the first rear face (604), and a third threaded arcuate recess (614) with a third thread (616) defined in the third side face and configured to receive a second threaded rod to be cut, wherein crests (618) and troughs (620) of the third thread (616) are aligned with troughs and crests of a thread of the second threaded rod when the first die (602) engages the second threaded rod; and
the second die (652) further comprises a fourth side face extending between the second front face (652) and the second rear face (654), and a fourth threaded arcuate recess (664) with a fourth thread (666) defined in the fourth side face and configured to receive the second threaded rod to be cut, wherein crests (668) and troughs (670) of the fourth thread (666) are aligned with troughs and crests of the thread of the second threaded rod when the second die (652) engages the second threaded rod.

6. The machine of claim 5, wherein the third (616) thread has a third trough (620) starting point in a plane of the first front face (602) and the fourth thread (666) has a fourth trough (670) starting point in a plane of the second front face(652), the third and fourth trough (670) starting points located such that the third and fourth threads (616, 666) form a continuous helical path when the first and second dies (602, 652) are closed around the second threaded rod.

7. The machine of claim 6, wherein the third trough (620) starting point is located at a third acute angle in a clockwise direction relative to a third radius that extends inward from the third side face (606) and bisects the third recess (614), and the fourth starting point is located at a fourth acute angle in a counter-clockwise direction relative to a fourth radius that extends outward from the fourth side face (656) and bisects the fourth recess (664).

8. The machine of claim 1, wherein the second thread (666) biases the second die (652) toward the first die (602) when cutting the first threaded rod, and preferably, the crests (668) and troughs (70) of the second thread (666) biases the second die (652) towards the first die (602)when cutting the first threaded rod.

9. The machine of claim 4, wherein the first angle and the second angle are each approximately 50° to approximately 60°.

10. The machine of claim 1, wherein the first die (602) is configured to be stationary while cutting a threaded rod, and the second die (652) is configured to be moveable while cutting a threaded rod.

11. The machine of claim 5, wherein the second threaded rod, the third arcuate recess (614) and the fourth arcuate recess (664) each have a diameter less than a diameter of the first threaded rod, the first arcuate recess (614), and the second arcuate recess (664).

## Patentansprüche

1. Maschine zum Schneiden von Gewindestangen, wobei die Maschine einen Satz von Schneidplatten (602, 652) und ein Paar von Armen (74, 79) aufweist, welche jeweils konfiguriert sind, eine der Schneidplatten (602, 652) zu halten, wobei zumindest einer der Arme (74, 79) relativ zu dem anderen Arm (74, 79) beweglich ist, um die Schneidplatten (602, 652) zu veranlassen, einen Gewindestab zu scheren, wobei der Satz von Schneidplatten (602, 652) umfasst:
eine erste Schneidplatte (602), welche einen ersten Korpus (601) mit einer ersten Vorderfläche (602), einer ersten Rückfläche (604), einer ersten Seitenfläche (606), welche sich zwischen der ersten Vorderfläche (602) und der ersten Rückfläche (604) erstreckt, und eine erste bogenförmige Gewindeausnehmung (614) mit einem ersten Gewinde (616) aufweist, welches in der ersten Seitenfläche (606) definiert ist und konfiguriert ist, um einen Abschnitt einer ersten Gewindestange aufzunehmen, welche geschnitten werden soll, wobei Gewindespitzen (618) und Gewindekerben (620) des ersten Gewindes (616) mit Gewindekerben und Gewindespitzen eines Gewindes der ersten Gewindestange ausgerichtet sind, wenn die erste Schneidplatte (602) in die erste Gewindestange eingreift; und
eine zweite Schneidplatte (652), welche einen zweiten Korpus (651) mit einer zweiten Vorderfläche (652), einer zweiten Seitenfläche (656), welche sich zwischen der zweiten Vorderfläche und einer zweiten Rückfläche (654) erstreckt, und eine zweite bogenförmige Gewindeausnehmung (664) mit einem zweiten Gewinde (666) aufweist, welches in der zweiten Seiten- (665) Fläche (656) definiert ist und konfiguriert ist, um einen Abschnitt der ersten Gewindestange aufzunehmen, welche geschnitten werden soll, wobei die erste Vorderfläche (602) der ersten Schneidplatte (602) und die zweite Vorderfläche (652) der zweiten Schneidplatte (652) im Wesentlichen in einer gemeinsamen Schneidebene P liegen, sodass die Vorderflächen (602, 652) nicht überlappen und im Wesentlichen nicht beabstandet sind, **dadurch gekennzeichnet, dass** Gewindespitzen (668) und Gewindekerben (670) des zweiten Gewindes (666) von Gewindekerben (620) und Gewindespitzen (618) des Gewindes der ersten Gewindestange axial versetzt sind, wenn die zweite Schneidplatte (652) in die erste Gewindestange eingreift.

2. Maschine nach Anspruch 1, wobei das erste Gewinde (616) einen Startpunkt der ersten Gewindekerbe (620) im Wesentlichen in der Ebene P der ersten Vorderfläche (602) aufweist und das zweite Gewinde (666) einen Startpunkt der zweiten Gewindekerbe (670) im Wesentlichen in der Ebene P der zweiten Vorderfläche (652) aufweist,
die Startpunkte der ersten und zweiten Gewindekerbe (670, 620) so angeordnet sind, dass das erste und zweite Gewinde (616, 666) einen unterbrochenen schraubenförmigen Pfad bilden, wenn die erste und zweite Schneidplatte (602, 652) rund um die erste Gewindestange geschlossen sind.

3. Maschine nach Anspruch 2, wobei der Startpunkt der ersten Gewindekerbe (620) von der ersten Schneidplatte (602) in einem ersten spitzen Winkel in einer Richtung gegen den Uhrzeigersinn relativ zu einem ersten Radius beabstandet ist, welche sich von der ersten Seitenfläche (606) nach außen erstreckt und die erste Ausnehmung (614) halbiert, und der zweite Startpunkt in einem zweiten spitzen Winkel in einer Richtung gegen den Uhrzeigersinn relativ zu einer zweiten Ausnehmung (664) angeordnet ist, welche sich von der zweiten Seitenfläche (656) nach außen erstreckt und die zweite Ausnehmung (664) halbiert.

4. Maschine nach Anspruch 3, wobei der erste Winkel annähernd gleich dem zweiten Winkel ist, sodass die erste Schneidplatte (602) mit der zweiten Schneidplatte (652) austauschbar ist.

5. Maschine nach Anspruch 1, wobei
die erste Schneidplatte (602) weiter eine dritte Seitenfläche (606), welche sich zwischen der ersten Vorderfläche (602) und der ersten Rückfläche (604) erstreckt, und eine dritte bogenförmige Gewindeausnehmung (614) mit einem dritten Gewinde (616) umfasst, welches in der dritten Seitenfläche definiert ist und konfiguriert ist, um eine zweite Gewindestange aufzunehmen, welche geschnitten werden soll, wobei Gewindespitzen (618) und Gewindekerben (620) des dritten Gewindes (616) mit Gewindekerben und Gewindespitzen eines Gewindes der zweiten Gewindestange ausgerichtet sind, wenn die erste Schneidplatte (602) in die zweite Gewindestange eingreift; und
die zweite Schneidplatte (652) weiter eine vierte Seitenfläche, welche sich zwischen der zweiten Vorderfläche (652) und der zweiten Rückfläche (654) erstreckt, und eine vierte bogenförmige Gewindeausnehmung (664) mit einem vierten Gewinde (666) umfasst, welches in der vierten Seitenfläche definiert ist und konfiguriert ist, um die zweite Gewindestange aufzunehmen, welche geschnitten werden soll, wobei Gewindespitzen (668) und Gewindekerben (670) des vierten Gewindes (666) mit Gewindekerben und Gewindespitzen des Gewindes der zweiten Gewindestange ausgerichtet sind, wenn die zweite Schneidplatte (652) in die zweite Gewindestange eingreift.

6. Maschine nach Anspruch 5, wobei das dritte Gewinde (616) einen Startpunkt der dritten Gewindekerbe (620) in einer Ebene der ersten Vorderfläche (602) aufweist und das vierte Gewinde (666) einen Startpunkt der vierten Gewindekerbe (670) in einer Ebene der zweiten Vorderfläche (652) aufweist, wobei die Startpunkte der dritten und vierten Gewindekerbe (670) so angeordnet sind, dass das dritte und vierte Gewinde (616, 666) einen ununterbrochenen schraubenförmigen Pfad bilden, wenn die erste und zweite Schneidplatte (602, 652) rund um die zweite Gewindestange geschlossen sind.

7. Maschine nach Anspruch 6, wobei der Startpunkt der dritte Gewindekerbe (620) in einem dritten spitzen Winkel in einer Richtung gegen den Uhrzeigersinn relativ zu einem dritten Radius angeordnet ist, welche sich von der dritten Seitenfläche (606) nach innen erstreckt und die dritte Ausnehmung (614) halbiert, und der vierte Startpunkt in einem vierten spitzen Winkel in einer Richtung gegen den Uhrzeigersinn relativ zu einem vierten Radius angeordnet ist, welche sich von der vierten Seitenfläche (656) nach außen erstreckt und die vierte Ausnehmung (664) halbiert.

8. Maschine nach Anspruch 1, wobei das zweite Gewinde (666) die zweite Schneidplatte (652) beim Schneiden der ersten Gewindestange zu der ersten Schneidplatte (602) hin vorspannt, und bevorzugt die Gewindespitzen (668) und Gewindekerben (670) des zweiten Gewindes (666) die zweite Schneidplatte (652) beim Schneiden der ersten Gewindestange zu der ersten Schneidplatte (602) hin vorspannt.

9. Maschine nach Anspruch 4, wobei der erste Winkel und der zweite Winkel jeweils annähernd 50° bis annähernd 60° betragen.

10. Maschine nach Anspruch 1, wobei die erste Schneidplatte (602) konfiguriert ist, um beim Schneiden einer Gewindestange stationär zu sein, und die zweite Schneidplatte (652) konfiguriert ist, um beim Schneiden einer Gewindestange beweglich zu sein.

11. Maschine nach Anspruch 5, wobei die zweite Gewindestange, die dritte bogenförmige Ausnehmung (614) und die vierte bogenförmige Ausnehmung (664) jeweils einen Durchmesser kleiner einem Durchmesser der ersten Gewindestange, der ersten bogenförmigen Ausnehmung (614) und der zweiten bogenförmigen Ausnehmung (664) aufweisen.

## Revendications

1. Machine de coupe de tiges filetées, la machine ayant un ensemble de filières (602, 652) et une paire de bras (74, 79) chacun configuré pour maintenir l'une des filières (602, 652), au moins l'un des bras (74, 79) étant mobile par rapport à l'autre bras (74, 79) pour amener les filières (602, 652) à cisailler une tige filetée, l'ensemble de filières (602, 652) comprenant :
une première filière (602) ayant un premier corps (601) avec une première face avant (602), une première face arrière (604), une première face latérale (606) s'étendant entre la première face avant (602) et la première face arrière (604), et une première cavité courbe filetée (614) avec un premier filetage (616) défini dans la première face latérale (606) et est configurée pour recevoir une partie d'une première tige filetée à couper, dans laquelle des crêtes (618) et des creux (620) du premier filetage (616) sont alignés sur des creux et des crêtes d'un filetage de la première tige filetée lorsque la première filière (602) vient en prise avec la première tige filetée ; et
une seconde filière (652) ayant un second corps (651) avec une seconde face avant (652), une deuxième face latérale (656) s'étendant entre la seconde face avant et une seconde face arrière (654), et une deuxième cavité courbe filetée (664) avec un deuxième filetage (666) défini dans la seconde face (656) latérale (665) et configurée pour recevoir une partie de la première tige filetée à couper, dans laquelle la première face avant (602) de la première filière (602) et la seconde face avant (652) de la seconde filière (652) reposent sensiblement dans un plan de coupe commun P de sorte que les faces avant (602, 652) ne se chevauchent pas et ne soient sensiblement pas espacées,
**caractérisée en ce que** des crêtes (668) et des creux (670) du deuxième filetage (666) sont décalés axialement par rapport aux creux (620) et aux crêtes (618) du filetage de la première tige filetée lorsque la seconde filière (652) vient en prise avec la première tige filetée.

2. Machine selon la revendication 1, dans laquelle le premier filetage (616) présente un premier point de départ de creux (620) sensiblement dans le plan P de la première face avant (602) et le deuxième filetage (666) présente un deuxième point de départ de creux (670) sensiblement dans le plan P de la seconde face avant (652),
les premier et deuxième points de départ de creux (670, 620) étant situés de sorte que les premier et deuxième filetages (616, 666) forment un trajet hélicoïdal discontinu lorsque les première et seconde filières (602, 652) sont refermées autour de la première tige filetée.

3. Machine selon la revendication 2, dans laquelle le premier point de départ de creux (620) est espacé de la première filière (602) selon un premier angle aigu dans le sens inverse des aiguilles d'une montre par rapport à un premier rayon qui s'étend vers l'extérieur depuis la première face latérale (606) et divise en deux la première cavité (614), et le deuxième point de départ est situé selon un deuxième angle aigu dans le sens inverse des aiguilles d'une montre par rapport à une deuxième cavité (664) qui s'étend vers l'extérieur depuis la deuxième face latérale (656) et divise en deux la deuxième cavité (664).

4. Machine selon la revendication 3, dans laquelle le premier angle est approximativement égal au deuxième angle de sorte que la première filière (602) soit interchangeable avec la seconde filière (652).

5. Machine selon la revendication 1, dans laquelle
la première filière (602) comprend en outre une troisième face latérale (606) s'étendant entre la première face avant (602) et la première face arrière (604), et une troisième cavité courbe filetée (614) avec un troisième filetage (616) défini dans la troisième face latérale et configurée pour recevoir une seconde tige filetée à couper, dans laquelle des crêtes (618) et des creux (620) du troisième filetage (616) sont alignés sur des creux et des crêtes d'un filetage de la seconde tige filetée lorsque la première filière (602) vient en prise avec la seconde tige filetée ; et
la seconde filière (652) comprend en outre une quatrième face latérale s'étendant entre la seconde face avant (652) et la seconde face arrière (654), et une quatrième cavité courbe filetée (664) avec un quatrième filetage (666) défini dans la quatrième face latérale et configurée pour recevoir la seconde tige filetée à couper, dans laquelle des crêtes (668) et des creux (670) du quatrième filetage (666) sont alignés sur des creux et des crêtes du filetage de la seconde tige filetée lorsque la seconde filière (652) vient en prise avec la seconde tige filetée.

6. Machine selon la revendication 5, dans laquelle le troisième filetage (616) présente un troisième point de départ de creux (620) dans un plan de la première face avant (602) et le quatrième filetage (666) présente un quatrième point de départ de creux (670) dans un plan de la seconde face avant (652), les troisième et quatrième points de départ de creux (670) étant situés de sorte que les troisième et quatrième filetages (616, 666) forment un trajet hélicoïdal continu lorsque les première et seconde filières (602, 652) sont refermées autour de la seconde tige filetée.

7. Machine selon la revendication 6, dans laquelle le troisième point de départ de creux (620) est situé selon un troisième angle aigu dans le sens des aiguilles d'une montre par rapport à un troisième rayon qui s'étend vers l'intérieur depuis la troisième face latérale (606) et divise en deux la troisième cavité (614), et le quatrième point de départ est situé à un quatrième angle aigu dans le sens inverse des aiguilles d'une montre par rapport à un quatrième rayon qui s'étend vers l'extérieur depuis la quatrième face latérale (656) et divise en deux la quatrième cavité (664).

8. Machine selon la revendication 1, dans laquelle le deuxième filetage (666) sollicite la seconde filière (652) vers la première filière (602) lors de la coupe de la première tige filetée, et de préférence, les crêtes (668) et les creux (670) du deuxième filetage (666) sollicite la seconde filière (652) vers la première filière (602) lors de la coupe de la première tige filetée.

9. Machine selon la revendication 4, dans laquelle le premier angle et le deuxième angle sont chacun approximativement de 50° à approximativement 60°.

10. Machine selon la revendication 1, dans laquelle la première filière (602) est configurée pour être immobile pendant la coupe d'une tige filetée, et la seconde filière (652) est configurée pour être mobile pendant la coupe d'une tige filetée.

11. Machine selon la revendication 5, dans laquelle la seconde tige filetée, la troisième cavité courbe (614) et la quatrième cavité courbe (664) ont chacune un diamètre inférieur à un diamètre de la première tige filetée, de la première cavité courbe (614) et de la deuxième cavité courbe (664).
